# EUROPEAN PATENT APPLICATION

(11) **EP 4 637 171 A1**
(43) Date of publication of application: **22.10.2025**
(21) Application number: 23915726.6
(22) Date of filing: 23.11.2023
(51) Int. Cl.: H04N 23/743, H04N 23/741, H04N 25/57, G06T 5/00

(54) **IMAGE PREVIEW METHOD AND TERMINAL DEVICE**

(30) Priority: 11.01.2023 CN 202310068071
(71) Applicant: Honor Device Co., Ltd., Shenzhen, Guangdong 518040 (CN)
(72) Inventor: DING, Yue, Shenzhen, Guangdong 518040 (CN); CHEN, Guoqiao, Shenzhen, Guangdong 518040 (CN); ZHANG, Dong, Shenzhen, Guangdong 518040 (CN); HOU, Weilong, Shenzhen, Guangdong 518040 (CN)
(74) Representative: Goddar, Heinz J.
(86) International application number: PCT/CN2023/133796
(87) International publication number: WO 2024/148968

(57) **Abstract**

This application provides an image preview method and a terminal device, and relates to the field of image processing technologies. **In** this method, a dark area in an image can be darker, and a bright area can be brighter or remain unchanged, so that a dynamic range of the image is improved. The method includes: obtaining a plurality of frames of images; obtaining pixel information and brightness information of a first image obtained by fusing the plurality of frames of images, where the pixel information includes a pixel value of each pixel point in the first image, and the brightness information includes a brightness value of each pixel point in the first image under a target exposure parameter; adjusting the first image based on the pixel information and the brightness information, to obtain a second image, where a pixel value of a pixel point in a first area in the first image is greater than a pixel value of a corresponding pixel point in the second image, and a pixel value of a pixel point in a second area in the first image is less than or equal to a pixel value of a corresponding pixel point in the second image; and increasing screen brightness of a display screen, and displaying the second image on the display screen.

## Description

This application claims priority to Chinese Patent Application No. 202310068071.4, filed with the China National Intellectual Property Administration on January 11, 2023 and entitled "IMAGE PREVIEW METHOD AND TERMINAL DEVICE", which is incorporated herein by reference in its entirety.

### TECHNICAL FIELD

This application relates to the field of image processing technologies, and in particular, to an image preview method and a terminal device.

### BACKGROUND

With development of a terminal industry, most terminal devices support a high dynamic range (high dynamic range, HDR) technology. The HDR technology can capture and display a huge dynamic range of the real world when a dynamic range available in a typical imaging sensor and a display device is limited. A dynamic range (dynamic range, DR) is used in many fields to represent a ratio of a maximum value to a minimum value of a variable. In a digital image, a dynamic range represents a ratio of maximum brightness to minimum brightness in a displayable range of the image, to be specific, a quantity of gray scale levels of the image from "brightest" to "darkest". A higher dynamic range of an image indicates richer brightness levels and a more realistic visual effect of the image.

Currently, the HDR technology is usually implemented as follows: capturing a plurality of images of different exposure levels of the same scene, fusing the images together into a single image, and then applying a tone mapping operation in a specific form to bring the fused image into a dynamic range of a standard dynamic range (standard dynamic range, SDR) display. The fused image is generally stored as an 8-bit image, and a final dynamic range of the fused image is approximately 255:1.

However, with continuous improvement of display technologies, most current display devices can provide dynamic ranges higher than 255:1. When displaying fused images, the display devices cannot display the images in higher dynamic ranges.

### SUMMARY

Embodiments of this application provide an image preview method and a terminal device, to display an image with a smaller dynamic range in a higher dynamic range, to obtain a visual range closer to that of a real-world scene.

To achieve the foregoing objectives, embodiments of this application adopt the following technical solutions:

According to a first aspect, this application provides an image preview method, applied to a terminal device including a display screen. The method includes: obtaining a plurality of frames of images in response to an operation of opening a camera application by a user, where the plurality of frames of images are in a one-to-one correspondence with a plurality of sets of exposure parameters; obtaining pixel information and brightness information of a first image obtained by fusing the plurality of frames of images, where the pixel information includes a pixel value of each pixel point in the first image, the brightness information includes a brightness value of each pixel point in the first image under a target exposure parameter, and the target exposure parameter is any one of the plurality of sets of exposure parameters or a combination of at least two sets of exposure parameters in the plurality of sets of exposure parameters; adjusting the first image based on the pixel information and the brightness information, to obtain a second image, where pixel points in the first image are in a one-to-one correspondence with pixel points in the second image, a pixel value of a pixel point in a first area in the first image is greater than a pixel value of a corresponding pixel point in the second image, a pixel value of a pixel point in a second area in the first image is less than or equal to a pixel value of a corresponding pixel point in the second image, the first area includes a pixel point that is in the first image and whose brightness value under the target exposure parameter is less than a first threshold, the second area includes a pixel point that is in the first image and whose brightness value under the target exposure parameter is greater than a second threshold, and the second threshold is greater than or equal to the first threshold; and increasing screen brightness of the display screen, and displaying the second image on the display screen.

It may be understood that, because the pixel value of the pixel point in the first area in the first image is greater than the pixel value of the corresponding pixel point in the second image, and the pixel value of the pixel point in the second area in the first image is less than or equal to the pixel value of the corresponding pixel point in the second image, that is, in a process of displaying the first image by the terminal device, a pixel value of a highlight area (that is, the second area) in the first image is increased or maintained, and a pixel value of a dark area (that is, the first area) is reduced, after the screen brightness of the display screen is increased, the highlight area in the first image is brighter, and the dark area in the first image is darker, or approaches original brightness of the dark area in the first image. This increases contrast between the highlight area and the dark area, and displays the first image with a higher dynamic range, so that an image displayed by the terminal device in a preview scene is closer to a real scene.

In an implementation provided in the first aspect, the obtaining brightness information of a first image includes: obtaining a target exposure image corresponding to the target exposure parameter, where the target exposure image is an image captured by the terminal device based on the target exposure parameter; and grouping pixel points in the target exposure image based on a preset grouping strategy, and using a mean value of brightness values of all pixel points in each group of pixel points as a brightness value of each pixel point in a corresponding group of pixel points in the first image under the target exposure parameter. In this way, the obtained brightness information can reflect a real brightness status of the first image.

In an implementation provided in the first aspect, if the target exposure parameter is a first parameter in the plurality of sets of exposure parameters, the target exposure image is an image frame corresponding to the first parameter; or if the target exposure parameter is a parameter determined based on the at least two sets of exposure parameters in the plurality of sets of exposure parameters, the target exposure image is an image obtained by fusing image frames corresponding to the at least two sets of exposure parameters, where the pixel points in the first image are in a one-to-one correspondence with the pixel points in the target exposure image.

In an implementation provided in the first aspect, that the adjusting the first image based on the pixel information and the brightness information, to obtain a second image includes: multiplying the pixel value of the pixel point in the first area by a first adjustment coefficient, to obtain the pixel value of the pixel point in the first area in the second image, where the first adjustment coefficient is greater than 0 and less than 1; and multiplying the pixel value of the pixel point in the second area by a second adjustment coefficient, to obtain the pixel value of the pixel point in the second area in the second image, where the second adjustment coefficient is greater than or equal to 1.

In an implementation provided in the first aspect, the second area includes N pixel points, each of the N pixel points corresponds to one second adjustment coefficient, and the multiplying the pixel value of the pixel point in the second area by a second adjustment coefficient, to obtain the pixel value of the pixel point in the second area in the second image includes: calculating a second adjustment coefficient of an i^{th} pixel point based on a brightness value of the i^{th} pixel point, where the second adjustment coefficient of the i^{th} pixel point is positively correlated with the brightness value of the i^{th} pixel point, the second adjustment coefficient of the i^{th} pixel point is greater than 1, i≤N, and both i and N are positive integers; and multiplying a pixel value of the i^{th} pixel point by the second adjustment coefficient of the i^{th} pixel point, to obtain a pixel value of an i^{th} pixel point in the second image. By setting different second adjustment coefficients for different pixel points, a bright and dark relationship between different pixel points in the second area can be preserved.

In an implementation provided in the first aspect, the first adjustment coefficient is a ratio of first screen brightness to second screen brightness, the first screen brightness is screen brightness before the brightness of the display screen is adjusted, the second screen brightness is screen brightness after the brightness of the display screen is adjusted, and the second screen brightness is greater than the first screen brightness and less than or equal to maximum screen brightness of the display screen.

In an implementation provided in the first aspect, the second screen brightness is the maximum screen brightness.

In an implementation provided in the first aspect, the second screen brightness is a smaller value of the maximum screen brightness and a first brightness threshold, the first brightness threshold is a product of the first screen brightness and a preset multiple, and the preset multiple is a natural number greater than 1.

In an implementation provided in the first aspect, the first threshold and the second threshold are determined based on a first brightness mean value, the first brightness mean value is a mean value of brightness values of all pixel points under the target exposure parameter, and the first threshold and the second threshold are positively correlated with the first brightness mean value.

In an implementation provided in the first aspect, the first threshold is less than the first brightness mean value, and the second threshold is greater than the first brightness mean value.

According to a second aspect, this application provides a terminal device. The terminal device includes: a memory, a display screen, and one or more processors, where the memory and the display screen are coupled to the processor. The memory is configured to store computer program code, and the computer program code includes computer instructions. When the computer instructions are executed by the processor, the terminal device is enabled to perform the method according to any one of the first aspect.

According to a third aspect, this application provides a computer-readable storage medium, including computer instructions. When the computer instructions are run on a terminal device, the terminal device is enabled to perform the method according to any one of the first aspect.

According to a fourth aspect, this application provides a computer program product. When the computer program product runs on a terminal device, the terminal device is enabled to perform the method according to any one of the first aspect and the possible designs of the first aspect.

According to a fifth aspect, this application provides a chip system. The chip system includes one or more interface circuits and one or more processors. The interface circuit and the processor are interconnected by lines. The foregoing chip system may be applied to a terminal device including a communication module and a memory. The interface circuit is configured to receive a signal from the memory of the terminal device and send the received signal to the processor, where the signal includes computer instructions stored in the memory. When the processor executes the computer instructions, the terminal device may perform the method according to any one of the first aspect and the possible designs of the first aspect.

For technical effects brought by the design manner in any one of the second aspect to the fifth aspect, refer to the technical effects brought by different design manners in the first aspect. Details are not described herein again.

### BRIEF DESCRIPTION OF DRAWINGS

FIG. 1 is a schematic diagram of a structure of a terminal device according to an embodiment of this application;
FIG. 2 is a diagram of an interface of a terminal device according to an embodiment of this application;
FIG. 3 is a schematic flowchart 1 of an image preview method according to an embodiment of this application;
FIG. 4A is a schematic diagram of fusing a plurality of frames of images to obtain a first image according to an embodiment of this application;
FIG. 4B is a schematic diagram of obtaining a second image based on a first image according to an embodiment of this application;
FIG. 5 is a schematic flowchart 2 of an image preview method according to an embodiment of this application;
FIG. 6 is a schematic diagram of a grouping strategy according to an embodiment of this application;
FIG. 7 is a schematic diagram of another grouping strategy according to an embodiment of this application;
FIG. 8 is a comparison diagram of a display effect according to an embodiment of this application;
FIG. 9 is a schematic flowchart 3 of an image preview method according to an embodiment of this application; and
FIG. 10 is a schematic diagram of a structure of a chip system according to an embodiment of this application.

### DESCRIPTION OF EMBODIMENTS

Technical solutions in embodiments of this application are described below with reference to accompanying drawings in embodiments of this application. In the description of this application, unless otherwise specified, "at least one" means one or more, and "a plurality of" means two or more. In addition, to facilitate clear description of the technical solutions in embodiments of this application, in embodiments of this application, words such as "first" and "second" are used to distinguish same items or similar items having substantially the same function and role. A person skilled in the art may understand that words such as "first" and "second" do not limit a quantity and an execution order, and words such as "first" and "second" do not limit a specific difference.

For clear and concise description of the following embodiments, brief introduction to a related concept or technology is first provided.

A dynamic range is used in many fields to represent a ratio of a maximum value to a minimum value of a variable. In a digital image, a dynamic range represents a ratio of maximum brightness to minimum brightness in a displayable range of the image, to be specific, a quantity of gray scale levels of the image from "brightest" to "darkest". A higher dynamic range of an image indicates richer brightness levels and a more realistic visual effect of the image.

Generally, a signal with a dynamic range that is of an image optical signal value and that exceeds 0.01 nits to 1000 nits is referred to as a high dynamic range optical signal value, and a signal with a dynamic range that is of an image optical information value and that falls short of 0.1 nits to 400 nits is referred to as a standard dynamic range (Standard Dynamic Range, SDR) optical signal value. An image with a high dynamic range may be referred to as an HDR image, and an image with a standard dynamic range may be referred to as an SDR image. The HDR image may be used for describing a full visual range of a real-world scene, and the HDR image can present detail information of extremely dark and bright areas that may be lost by a conventional capturing device but can be perceived by a human visual system.

An exposure value (exposure values, EV) may reflect an exposure level of an image. By adjusting an exposure parameter of a camera, the image can have different EVs. The exposure parameter is a parameter for affecting an exposure amount of the camera, and the parameter includes but is not limited to an aperture, a shutter, exposure time, a sensitivity (ISO), and the like. In embodiments of this application, an exposure value for normal exposure is represented as EV0, an exposure value for under-exposure is represented as EV-, and an exposure value for over-exposure is represented as EV+. In addition, an exposure value of EV0×2ⁿ is represented as EVn. For example, EV-1 represents an exposure value that is half of EV0, and EV-2 represents an exposure value that is half of EV-1. For another example, EV1 represents an exposure value that is twice of EV0, and EV2 represents an exposure value that is twice of EV1.

In a solution provided in conventional technologies, a terminal device may capture a plurality of images with different exposure values in the same scene, and fuse the images together into an "HDR image". However, the "HDR image" is generally an 8-bit image, and a final dynamic range of the "HDR image" is approximately 255:1. In this way, a dynamic range of the "HDR image" still falls within the standard dynamic range. In other words, the "HDR image" is actually an SDR image.

When the "HDR image" is displayed on a device with a higher dynamic range, brightness of the "HDR image" may be increased or reduced with screen brightness of the device. However, during change, brightness of a highlight area and brightness of a dark area in the "HDR image" may change in the same ratio, so that contrast between the highlight area and the dark area does not change. In other words, the dynamic range of the "HDR image" displayed on the device is not changed, and the higher dynamic range of the device is not fully utilized.

In view of this, embodiments of this application provide an image preview method, applied to a terminal device. The terminal device can obtain, after opening a camera application, a plurality of frames of images and fuse the plurality of frames of images to obtain a first image. The first image is equivalent to an SDR image. Then, the terminal device may obtain pixel information and brightness information of the first image. The brightness information includes a brightness value of each pixel point in the first image under a target exposure parameter, and may be for reflecting a real brightness status of the first image. Then, the first image is adjusted based on the pixel information and the brightness information, to obtain a second image, where a pixel value of a pixel point in a first area in the first image is greater than a pixel value of a corresponding pixel point in the second image, and a pixel value of a pixel point in a second area in the first image is less than or equal to a pixel value of a corresponding pixel point in the second image. Then, the terminal device increases screen brightness of a display screen, and displays the second image on the display screen.

It can be seen that, in a preview process, the terminal device may increase or maintain a pixel value of a highlight area (that is, the second area) in the SDR image, and reduce a pixel value of a dark area (that is, the first area). Therefore, after the screen brightness of the display screen is increased, the highlight area in the SDR image is brighter, and the dark area in the SDR image is darker or approaches original brightness of the dark area in the SDR image. This increases contrast between the highlight area and the dark area, so that the SDR image is displayed in the higher dynamic range, and the SDR image displayed by the terminal device in an image preview scene is closer to a real scene.

The terminal device provided in embodiments of this application may be a device having a camera and a display screen, such as a mobile phone, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device, a vehicle-mounted device, a smart home device, and/or a smart city device. A specific type of the terminal device is not particularly limited in embodiments of this application.

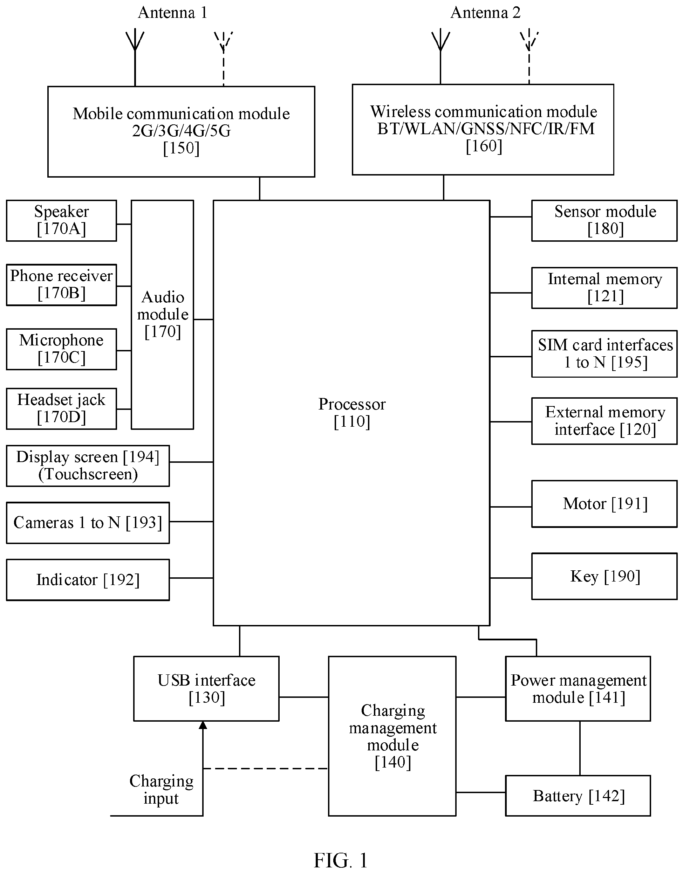

FIG. 1 is a schematic diagram of a structure of a terminal device according to an embodiment of this application. As shown in FIG. 1, the terminal device may include: a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a phone receiver 170B, a microphone 170C, a headset jack 170D, a sensor module 180, a key 190, a motor 191, an indicator 192, a camera 193, a display screen 194, a subscriber identification module (subscriber identification module, SIM) card interface 195, and the like.

The sensor module 180 may include sensors such as a pressure sensor, a gyroscope sensor, a barometric pressure sensor, a magnetic sensor, an acceleration sensor, a distance sensor, a proximity light sensor, a fingerprint sensor, a temperature sensor, a touch sensor, an ambient light sensor, and a bone conduction sensor.

It may be understood that, the structure shown in this embodiment does not constitute a specific limitation on the terminal device. In some other embodiments, the terminal device may include more or fewer components than those shown in the figure, or some components may be combined, or some components may be split, or a different component deployment may be used. The illustrated components may be implemented in hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent devices, or may be integrated into one or more processors.

The controller may be a neural center and a command center of the terminal device. The controller may generate an operation control signal based on instruction operation code and a timing signal, to complete control of instruction fetching and instruction execution.

The processor 110 may further be provided with a memory, configured to store instructions and data. In some embodiments, the memory in the processor 110 is a cache memory. The memory may store instructions or data that have just been used or used cyclically by the processor 110. If the processor 110 needs to use the instructions or data again, the instructions or data may be invoked directly from the memory. In this way, repeat access is avoided, and waiting time of the processor 110 is reduced, so that system efficiency is improved.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

It may be understood that, interface connection relationships between the modules shown in this embodiment are merely schematic descriptions and do not constitute a limitation on the structure of the terminal device. In some other embodiments, the terminal device may alternatively use an interface connection manner different from that of the foregoing embodiment, or a combination of a plurality of interface connection manners.

The charging management module 140 is configured to receive a charging input from a charger. The charger may be a wireless charger or a wired charger. While the charging management module 140 charges the battery 142, power may also be supplied to the terminal device through the power management module 141.

The power management module 141 is configured to connect the battery 142, the charging management module 140, and the processor 110. The power management module 141 receives an input of the battery 142 and/or the charging management module 140 to supply power to the processor 110, the internal memory 121, an external memory, the display screen 194, the camera 193, the wireless communication module 160, and the like. In some embodiments, the power management module 141 and the charging management module 140 may alternatively be disposed in the same device.

A wireless communication function of the terminal device may be implemented by using the antenna 1, the antenna 2, the mobile communication module 150, the wireless communication module 160, the modem processor, the baseband processor, and the like. In some embodiments, the antenna 1 of the terminal device is coupled to the mobile communication module 150, and the antenna 2 is coupled to the wireless communication module 160, so that the terminal device can communicate with a network and another device by using a wireless communication technology.

The antenna 1 and the antenna 2 are configured to transmit and receive an electromagnetic wave signal. Each antenna in the terminal device may be configured to cover one or more communication bands. Different antennas may also be multiplexed to improve utilization of the antenna. For example, the antenna 1 may be multiplexed into a diversity antenna of a wireless local area network. In some other embodiments, the antenna may be used in combination with a tuning switch.

The mobile communication module 150 may provide a solution for wireless communication including 2G, 3G, 4G, 5G and the like that is applied to the terminal device. The mobile communication module 150 may include at least one filter, a switch, a power amplifier, a low noise amplifier (low noise amplifier, LNA), and the like. The mobile communication module 150 may receive an electromagnetic wave from the antenna 1, perform processing such as filtering and amplification on the received electromagnetic wave, and transmit the received electromagnetic wave to the modem processor for demodulation.

The mobile communication module 150 may further amplify a signal modulated by the modem processor, convert the signal into an electromagnetic wave through the antenna 1, and radiate the electromagnetic wave. In some embodiments, at least some functional modules of the mobile communication module 150 may be disposed in the processor 110. In some embodiments, at least some functional modules of the mobile communication module 150 may be disposed in the same device as at least some modules of the processor 110.

The wireless communication module 160 may provide a solution for wireless communication including a WLAN (such as a (wireless fidelity, Wi-Fi) network), bluetooth (bluetooth, BT), a global navigation satellite system (global navigation satellite system, GNSS), frequency modulation (frequency modulation, FM), near field communication (near field communication, NFC), an infrared (infrared, IR) technology, and the like that are applied to the terminal device.

The wireless communication module 160 may be one or more devices integrating at least one communication processing module. The wireless communication module 160 receives an electromagnetic wave through the antenna 2, performs frequency modulation and filtering on an electromagnetic wave signal, and sends a processed signal to the processor 110. The wireless communication module 160 may further receive a to-be-sent signal from the processor 110, perform frequency modulation and amplification on the signal, and convert a signal into an electromagnetic wave through the antenna 2 to radiate the signal.

The terminal device implements a display function through the GPU, the display screen 194, the application processor, and the like. The GPU is an image processing microprocessor, and is connected to the display screen 194 and the application processor. The GPU is configured to perform mathematical and geometric calculation, to perform graphics rendering. The processor 110 may include one or more GPUs, and the one or more GPUs execute program instructions to generate or change display information.

The display screen 194 is configured to display an image, a video, and the like. The display screen 194 includes a display panel.

The terminal device may implement a capturing function through the ISP, the camera 193, the video codec, the GPU, the display screen 194, the application processor, and the like. The ISP is configured to process data fed back by the camera 193. The camera 193 is configured to capture a still image or a video. In some embodiments, the terminal device may include 1 or N cameras 193, where N is a positive integer greater than 1.

The external memory interface 120 may be configured to connect to an external memory card, for example, a Micro SD card, to expand a storage capability of the terminal device. The external memory card communicates with the processor 110 through the external memory interface 120, to implement a data storage function. For example, files such as music and videos are stored in the external memory card.

The internal memory 121 may be configured to store computer-executable program code, and the executable program code includes instructions. The processor 110 executes various functional applications and data processing of the terminal device by running the instructions stored in the internal memory 121. For example, in this embodiment of this application, the processor 110 may execute the instructions stored in the internal memory 121. The internal memory 121 may include a program storage area and a data storage area.

The program storage area may store an operating system, an application program needed by at least one function (such as a sound playback function and an image playback function), and the like. The data storage area may store data (such as audio data and an address book) created during use of the terminal device, and the like. In addition, the internal memory 121 may include a high-speed random access memory, and may further include a non-volatile memory, for example, at least one magnetic disk storage device, a flash memory device, or a universal flash storage (universal flash storage, UFS).

The terminal device may implement an audio function, for example, music playing and recording, through the audio module 170, the speaker 170A, the phone receiver 170B, the microphone 170C, the headset jack 170D, the application processor, and the like. The key 190 includes a power-on key, a volume key, and the like. The key 190 may be a mechanical key, or may be a touch key. The motor 191 may generate a vibration prompt. The motor 191 may be used for an incoming call vibration prompt, or may be used for touch vibration feedback. The indicator 192 may be an indicator light, and may be configured to indicate a charging status and a change in power, or may be configured to indicate a message, a missed call, a notification, or the like. The SIM card interface 195 is configured to connect to a SIM card. The SIM card may be inserted into the SIM card interface 195 or unplugged from the SIM card interface 195, to come into contact with or be separated from the terminal device. The terminal device may support one or N SIM card interfaces, where N is a positive integer greater than 1. The SIM card interface 195 may support a Nano SIM card, a Micro SIM card, the SIM card, or the like.

The following describes the image preview method provided in this application in detail with reference to the accompanying drawings.

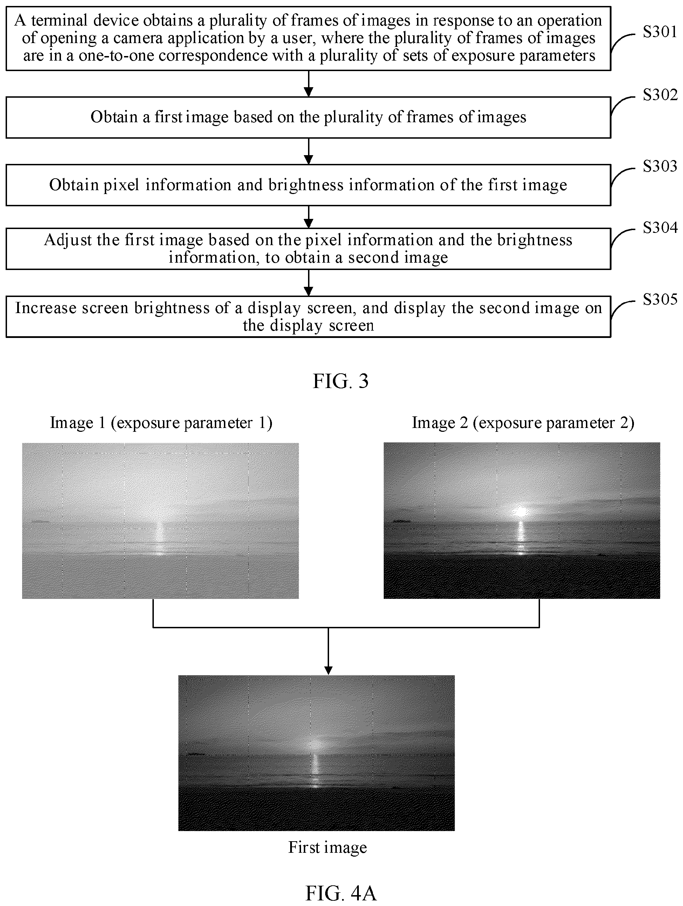

An image preview method provided in embodiments of this application may be applied to a terminal device including a display screen. For example, an example in which the terminal device is a mobile phone is used. An application (hereinafter referred to as a camera APP) having a capturing function may be installed in the mobile phone. A user may use the camera APP to take a picture and record a video. In a process in which the user performs image capturing by using the camera APP, the mobile phone collects a plurality of frames of images with different exposure values, to obtain pixel information and brightness information of a first image obtained by fusing the plurality of frames of images, then performs tone mapping on the first image based on current screen brightness and maximum screen brightness of a display screen, to obtain a second image, and finally displays the second image on the display screen after the screen brightness is increased. The second image is an image obtained by the mobile phone by using the image preview method provided in this application. For details, refer to FIG. 3 and related text descriptions. This is not described herein.

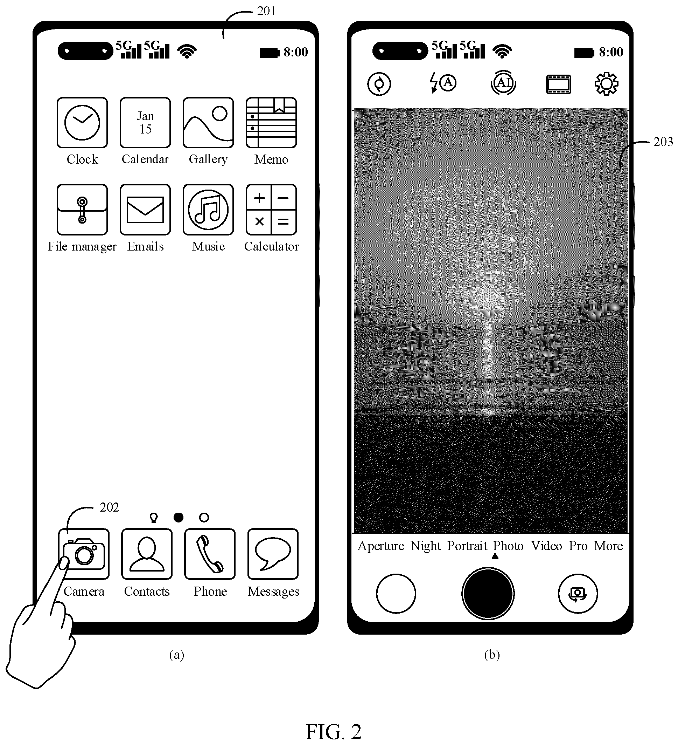

For example, as shown in (a) in FIG. 2, a main interface 201 (which may also be referred to as a desktop) of a mobile phone includes an icon 202 of a camera application. The mobile phone may receive a tap operation of the user on the icon 202 of the camera application (that is, an operation of opening the camera application by the user). In response to the tap operation, as shown in (b) in FIG. 2, the mobile phone increases screen brightness of a display screen and displays an image 203. The image 203 is the second image.

To implement the image preview method provided in this application, based on the terminal device shown in FIG. 1, this application provides an implementation of the image preview method. The image preview method may be performed by the terminal device shown in FIG. 1. As shown in FIG. 3, FIG. 3 is a schematic flowchart 1 of an image preview method according to this application. The image preview method includes the following steps.

S301: A terminal device obtains a plurality of frames of images in response to an operation of opening a camera application by a user, where the plurality of frames of images are in a one-to-one correspondence with a plurality of sets of exposure parameters.

The operation of opening the camera application by the user may be an operation of tapping an icon of the camera application, or an operation of enabling a capturing function on a third-party application such as an application for communication and social networking. This is not specifically limited herein.

In other words, the terminal device can obtain the plurality of frames of images in a preview process. The plurality of frames of images are images collected by the terminal device under different exposure parameters in the same scene. It should be noted that, after collecting the plurality of frames of images, the terminal device does not directly display the plurality of frames of images, but directly displays the second image after performing processing by using the image preview method provided in this application to obtain the second image (for details, refer to the following).

In an optional implementation, the plurality of frames of images are captured by different cameras under different exposure parameters. In another optional implementation, the plurality of frames of images may alternatively be obtained by one camera successively performing a plurality of times of capturing in short time under different exposure parameters, where a time interval between each capturing is as short as possible.

Because each of the plurality of frames of images respectively corresponds to one set of exposure parameters, exposure values of the plurality of frames of images are different. For example, as shown in FIG. 4A, the plurality of frames of images may include an image 1 and an image 2. The image 1 is captured by a camera 1 based on an exposure parameter 1, and the image 2 is captured by a camera 2 based on an exposure parameter 2. The camera 1 and the camera 2 may be the same camera or different cameras. It can be seen that, an EV value corresponding to the image 1 is less than an EV value corresponding to the image 2. There is an under-exposure situation in the image 1. This leads to clear outlines in a highlight area in a picture, but a dark area is blurred due to lack of exposure. There is an over-exposure situation in the image 2. This causes a highlight area in a picture to be distorted by over-exposure, and a dark area to be clear of details and outlines due to compensation of an exposure value.

It should be noted that, FIG. 4A only uses images under EV- and EV+ as an example. Actually, the mobile phone may also obtain images under more exposure situations, for example, images under situations such as EV0, EV-1, EV-2, EV+1, and EV+2. This is not specifically limited herein.

S302: Obtain a first image based on the plurality of frames of images.

The first image is an image obtained by fusing the plurality of frames of images by the terminal device. Specifically, the terminal device may fuse the plurality of frames of images into the first image though tone mapping. The tone mapping may include global tone mapping or local tone mapping. The global tone mapping may perform mapping by using a histogram, a Gamma (Gamma) function, a Sigmoid non-linear function, or the like. The global tone mapping can well preserve global contrast, but loses some local details. However, the local tone mapping may first perform area division on the plurality of frames of images, and then process each divided area in a manner similar to the global tone mapping. Finally, relative contrast between adjacent areas is preserved, so that local details can be well preserved.

For example, as shown in FIG. 4A, the terminal device may fuse the image 1 and the image 2 to obtain an image 3 (that is, the first image). In comparison with a single frame image (that is, the image 1 or the image 2), a dark area and a highlight area in the image 3 have clear details and outlines, and have a higher dynamic range.

S303: Obtain pixel information and brightness information of the first image.

The pixel information includes a pixel value of each pixel point in the first image. According to a type of an image sensor that captures the image, the pixel value of each pixel point includes but is not limited to an RGB value, an RGGB value, an RGBW value, an RYYB value, and the like. RGB represents that a color of each pixel is formed by three components: red (red, R), green (green, G), and blue (blue, B). RGGB represents that a color of each pixel is formed by four components: red, green, green, and blue. RGBW represents that a color of each pixel is formed by four components: red, green, blue, and white (white, W). RYYB represents that a color of each pixel is formed by four components: red, yellow (yellow, Y), yellow, and blue. The pixel value of each pixel point may be obtained through the image sensor.

The brightness information includes a brightness value of each pixel point in the first image under a target exposure parameter. In an optional implementation, the target exposure parameter is any one of the plurality of sets of exposure parameters or a combination of at least two sets of exposure parameters in the plurality of sets of exposure parameters. It should be noted that, if the target exposure parameter is greater than a first value, dark details of the first image are clear; if the target exposure parameter is less than a second value (where the second value is less than the first value), a highlight area in the first image is clear and there is no over-exposure situation; or if the target exposure parameter ranges from a first value to a second value, the first image has clear bright and dark contrast, and there is no over-exposure or under-exposure situation. In an optional implementation, the target exposure parameter may be a parameter obtained by combining the plurality of sets of exposure parameters, that is, an exposure parameter corresponding to the first image. For example, the target exposure parameter includes exposure time and a sensitivity, and the terminal device performs weighted summation on exposure time and sensitivities of the at least two sets of exposure parameters respectively to obtain the exposure time and the sensitivity as the target exposure parameter.

For example, the plurality of exposure parameters include EV-1, EV0, EV+1, and EV+2. The terminal device may directly take any one of parameters EV-1, EV0, EV+1, and EV+2 as the target exposure parameter. Alternatively, the terminal device may change parameters such as the exposure time and the sensitivity to cause EV to range from EV+1 to EV+2, to obtain the target exposure parameter.

In another optional implementation, the terminal device may input the plurality of exposure parameters into a pre-trained neural network model, to obtain the target exposure parameter. For example, the terminal device or a server may iteratively train an initial model based on a large quantity of training samples until the initial model converges, to obtain a trained neural network model. Each group of the training samples includes a plurality of exposure parameters and a target exposure parameter marked as true (true) or false (false). In this way, the trained neural network model can be configured to obtain the target exposure parameter based on the plurality of input exposure parameters.

In conclusion, the target exposure parameter may affect bright and dark effects of the first image, and a specific determining method thereof may be set and maintained in a background in advance by operation and maintenance staff based on the bright and dark effects needed by the image.

S304: Adjust the first image based on the pixel information and the brightness information, to obtain the second image.

The first image includes a plurality of areas, the plurality of areas include at least a first area and a second area, the first area is the dark area in the first image, and the second area is the highlight area in the first image. Specifically, the first area includes a pixel point that is in the first image and whose brightness value under the target exposure parameter is less than a first threshold, the second area includes a pixel point that is in the first image and whose brightness value under the target exposure parameter is greater than a second threshold, and the second threshold is greater than or equal to the first threshold.

In this embodiment of this application, the terminal device may determine the first threshold and the second threshold based on a first brightness mean value, and the first threshold and the second threshold are positively correlated (including linear or non-linear) with the first brightness mean value. The first brightness mean value is a mean value of brightness values of all pixel points under the target exposure parameter, and is for reflecting a real brightness level of the first image. For example, if a bit width of the brightness value is 8 bits, after the brightness value is digitized, the brightness value ranges from 0 to 255. The first brightness mean value may be obtained by digitizing each brightness value and averaging the brightness values.

In an optional implementation, the first threshold is equal to the second threshold (for example, both the first threshold and the second threshold are the first brightness mean value). In this case, the first image includes two areas: the first area and the second area. Specifically, the terminal device may divide a pixel point whose brightness value under the target exposure parameter is less than the first threshold (the second threshold) into the first area, and divide a pixel point whose brightness value under the target exposure parameter is greater than or equal to the first threshold (the second threshold) into the second area. In this way, the first area includes a pixel point of the dark area in the first image, and the second area includes a pixel point of the bright area in the first image.

For example, the first threshold may be 165. If a brightness value of a pixel point 1 under the target exposure parameter is 100, since 100<165, the pixel point 1 is divided into the first area. If a brightness value of a pixel point 2 under the target exposure parameter is 188, since 188>165, the pixel point 2 is divided into the second area.

In an optional implementation, the second threshold is greater than the first threshold. For example, the second threshold is a value obtained by increasing the first value based on the first brightness mean value, and the second threshold is a value obtained by increasing the second value (where the second value is less than the first value) based on the first brightness mean value. Alternatively, the second threshold is a value obtained by increasing the first value based on the first brightness mean value, and the second threshold is a value obtained by reducing the second value (where both the second value and the first value are positive numbers) based on the first brightness mean value. In this case, the first image includes the first area, the second area, and a third area. The third area is a transition area between the first area and the second area. Specifically, the terminal device may divide a pixel point whose brightness value under the target exposure parameter is less than the first threshold into the first area, divide a pixel point whose brightness value under the target exposure parameter is greater than or equal to the second threshold into the second area, and divide a pixel point whose brightness value under the target exposure parameter is greater than or equal to the first threshold and less than the second threshold into the third area. In this way, the first area includes a pixel point of the dark area in the first image, and the second area includes a pixel point of the bright area in the first image.

In an optional implementation, the first threshold is less than the first brightness mean value, and the second threshold is greater than the first brightness mean value.

It should be noted that, the foregoing only shows two image area division manners. In this embodiment of this application, a finer partitioning method may also be used to divide the first image into more image areas. This is not specifically limited herein.

Pixel points in the first image are in a one-to-one correspondence with pixel points in the second image, and the second image also includes a first area and a second area. A pixel value of a pixel point in the first area in the first image is greater than a pixel value of a corresponding pixel point in the second image, and a pixel value of a pixel point in the second area in the first image is less than or equal to a pixel value of a corresponding pixel point in the second image. In other words, the terminal device reduces the pixel value of the pixel point in the first area in the first image, and increases or maintains the pixel value of the pixel point in the second area in the first image, to obtain the second image.

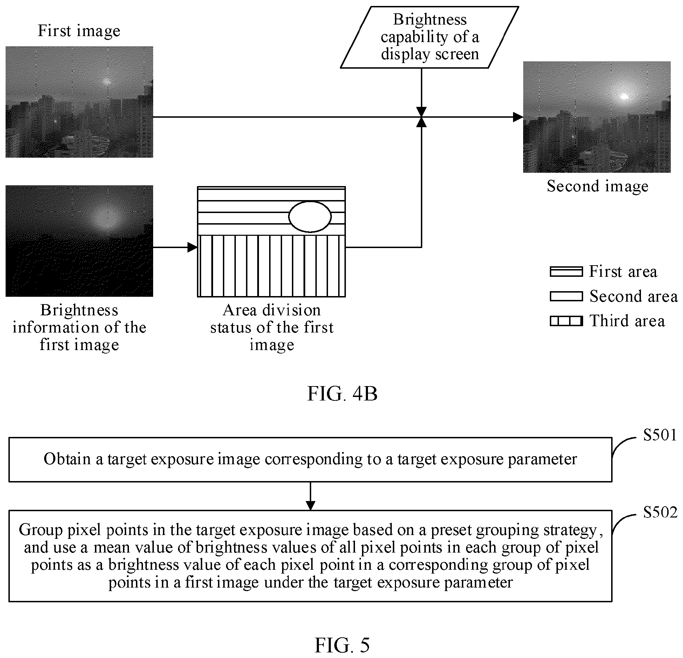

For example, as shown in FIG. 4B, the terminal device may divide a first image into a plurality of areas based on brightness information of the first image (an example in which the first image includes three areas is used in FIG. 4B), and then adjust the first image based on a brightness capability of the display screen and an area division status of the first image, to obtain a second image. Contrast between a highlight area and a dark area in the second image is greater than contrast between a highlight area and a dark area in the first image.

S305: Increase screen brightness of the display screen, and display the second image on the display screen.

It may be understood that, the pixel point has observed brightness. The observed brightness of the pixel point may indicate a bright and dark status of the pixel point on the display screen. The observed brightness of the pixel point is related to the screen brightness of the display screen and the pixel value of the pixel point. In an optional implementation, observed brightness of a pixel point may satisfy a formula: Lg=Gray*Lp, where Lg is the observed brightness, Lp is screen brightness, and Gray is a pixel gray scale. The pixel gray scale of the pixel point may be determined based on the pixel value of the pixel point, where a larger pixel value indicates a larger pixel gray scale. For example, the pixel gray scale and the pixel value may satisfy a formula: Gray=0.299R+0.587G+0.114B.

It can be seen that, when the image is displayed on the display screen, both the screen brightness of the display screen and the pixel value of the pixel point affect the bright and dark status of the pixel point on the screen. When the pixel value of the pixel point is certain, larger screen brightness of the display screen indicates larger observed brightness of the pixel point, in other words, the pixel point is brighter. When the screen brightness of the display screen is certain, a larger pixel value of the pixel point indicates larger observed brightness of the pixel point, in other words, the pixel point is brighter.

It may be understood that, because the pixel value of the pixel point in the first area in the second image is less than the pixel value of the pixel point in the first area in the first image, after the screen brightness of the display screen is increased, observed brightness of the pixel point in the first area in the second image can approach observed brightness before the screen brightness is not adjusted; and because the pixel value of the pixel point in the first area in the second image is greater than or equal to the pixel value of the pixel point in the second area in the first image, after the screen brightness of the display screen is increased, observed brightness of the pixel point in the second area in the second image can be greater than the observed brightness before the screen brightness is not adjusted. In other words, the screen brightness of the display screen is increased and the second image is displayed on the display screen, so that observed brightness of the first area in the second image remains unchanged; and observed brightness of the second area in the first image is increased, that is, bright and dark contrast between the first area and the second area in the second image is increased, and a dynamic range of the second image is expanded.

In this embodiment of this application, the terminal device may adjust the screen brightness of the display screen from first screen brightness to second screen brightness. The second screen brightness is greater than the first screen brightness and less than or equal to maximum screen brightness of the display screen. The maximum screen brightness is maximum brightness supported by the display screen.

It may be understood that, the first screen brightness is screen brightness before the brightness of the display screen is adjusted, or the first screen brightness may be understood as current screen brightness of the display screen. The terminal device can directly read a relevant parameter of the display screen to obtain the first screen brightness.

The second screen brightness is screen brightness after the brightness of the display screen is adjusted. In an optional implementation, the second screen brightness is associated with the first screen brightness and the maximum screen brightness of the display screen. Specifically, the terminal device may determine a first brightness threshold based on the first screen brightness. For example, the terminal device may use a preset multiple of the first screen brightness as the first brightness threshold. The preset multiple may be any value greater than 1, for example, 3. Then, the terminal device may compare the first brightness threshold with the maximum screen brightness. If the first brightness threshold is less than or equal to the maximum screen brightness, it is determined that the second screen brightness is the first brightness threshold; or if the first brightness threshold is greater than the maximum screen brightness, it is determined that the second screen brightness is the maximum screen brightness. In other words, the second screen brightness is a smaller value of the maximum screen brightness and the first brightness threshold.

In another optional implementation, the second screen brightness may be fixed to the maximum screen brightness. To be specific, regardless of the current screen brightness, the terminal device always uses the maximum screen brightness as the second screen brightness, and adjusts the screen brightness of the display screen to the maximum screen brightness.

In an optional implementation, the terminal device may multiply the pixel value of the pixel point in the first area by a first adjustment coefficient, to obtain the pixel value of the pixel point in the first area in the second image, and multiply the pixel value of the pixel point in the second area by a second adjustment coefficient, to obtain the pixel value of the pixel point in the second area in the second image. The first adjustment coefficient is greater than 0 and less than 1, and the second adjustment coefficient is greater than or equal to 1.

It may be understood that, the first adjustment coefficient greater than 0 and less than 1 can be for reducing the pixel value of the pixel point in the first area in the first image, so that the pixel value of the pixel point in the first area in the second image is less than the pixel value of the pixel point in the first area in the first image; and the second adjustment coefficient greater than or equal to 1 can be for increasing or maintaining the pixel value of the pixel point in the second area in the first image, so that the pixel value of the pixel point in the first area in the second image is greater than or equal to the pixel value of the pixel point in the second area in the first image.

In an optional implementation, the first adjustment coefficient is a ratio of the first screen brightness to the second screen brightness. Because the first screen brightness is always less than the second screen brightness, the first adjustment coefficient is greater than 0 and less than 1. In this way, the pixel value of the pixel point in the first area in the first image can be reduced, so that the observed brightness of the pixel point in the first area becomes smaller, that is, the pixel point is darker.

In an optional implementation, the second adjustment coefficient may be 1. In this case, the pixel value of the pixel point in the second area in the first image may remain unchanged, so that the observed brightness of the pixel point in the second area remains unchanged, that is, the brightness remains unchanged.

In another optional implementation, the second adjustment coefficient is a variable value, and is related to a brightness value of each pixel point. A second adjustment coefficient of each pixel point is related to a brightness value of the pixel point under the target exposure parameter. Specifically, if the second area includes N pixel points, a second adjustment coefficient of an i^{th} pixel point satisfies a formula: Q2ᵢ=1+Lᵢ/Lₘₐₓ, where Q2ᵢ represents the second adjustment coefficient of the i^{th} pixel point, Lᵢ represents a brightness value of the i^{th} pixel point under the target exposure parameter, and Lₘₐₓ represents a maximum brightness value of the pixel point. For example, an example in which a bit width of the brightness value is 8 bits is used, and the brightness value ranges from 0 to 255. If a brightness value of a pixel point is C, a second adjustment coefficient Q2 corresponding to the pixel point is equal to 1+C/255. In this way, different pixel values can have different second adjustment coefficients, so that a bright and dark relationship between different pixel points in the second area can be preserved as much as possible.

In an optional implementation, based on the image preview method shown in FIG. 3, this embodiment provides a manner for obtaining the brightness information of the first image.

As shown in FIG. 5, FIG. 5 is a schematic flowchart 2 of an image preview method according to this application. As shown in FIG. 5, obtaining the brightness information of the first image may include the following steps.

S501: Obtain a target exposure image corresponding to the target exposure parameter.

An image corresponding to the target exposure parameter is the target exposure image. The target exposure image may be understood as an exposure image that the terminal device should obtain when capturing under the target exposure parameter. If the target exposure parameter is one of the plurality of sets of exposure parameters, the target exposure image may be an image captured by the terminal device under the set of exposure parameters. If the target exposure parameter is the parameter obtained by combining the at least two sets of exposure parameters in the plurality of sets of exposure parameters, the target exposure image may be an image obtained by fusing image frames corresponding to the at least two sets of exposure parameters. For example, the plurality of sets of exposure parameters include EV0, EV-, and EV+, and EV0, EV-, and EV+ respectively correspond to an EV0 image frame, an EV- image frame, and an EV+ image frame. If the target exposure parameter is EV0, the EV0 image frame is used as the target exposure image; or if the target exposure parameter is a parameter obtained by combining EV- and EV+, an image obtained by fusing the EV- image frame and the EV+ image frame is used as the target exposure image. In another example, if the target exposure parameter is a parameter obtained by combining the plurality of exposure parameters, a first image obtained by fusing a plurality of frames of images corresponding to the plurality of exposure parameters is used as the target exposure image.

It should be noted that, the target exposure image may be the same as or different from the first image. For example, a mobile phone captures an EV0 image, an EV- image, and an EV+ image, and obtains the first image based on the EV0 image, the EV- image, and the EV+ image. If the mobile phone uses EV0 as the target exposure parameter, the first image is different from the target exposure image, and a brightness value of a pixel point in the first image under the target exposure parameter is a brightness value of the pixel point in the EV0 image. If the target exposure parameter is a parameter obtained by combining EV-, EV0, and EV+, the first image is the same as the target exposure image.

Pixel points in the target exposure image are in a one-to-one correspondence with pixel points in the first image. That a pixel point 1 in the target exposure image corresponds to a pixel point 2 in the first image may be understood as that coordinates of the pixel point 1 in the target exposure image are the same as coordinates of the pixel point 2 in the first image.

S502: Group the pixel points in the target exposure image based on a preset grouping strategy, and use a mean value of brightness values of all pixel points in each group of pixel points as a brightness value of each pixel point in a corresponding group of pixel points in the first image under the target exposure parameter.

The grouping strategy may be set based on an actual requirement. For example, in the grouping strategy, one pixel point may be divided into a group, or a pixel matrix formed by n×m pixel points may be divided into a group. For example, a pixel matrix formed by 2×2 and 3×2 pixel points may be divided into a group. This is not specifically limited herein.

If the terminal device divides one pixel point into a group, the terminal device may use a brightness value of the pixel point as a brightness value of a corresponding pixel point in the first image under the target exposure parameter. If the terminal device divides a pixel matrix formed by the n×m pixel points into a group, the terminal device may use a brightness mean value of the group of pixel points as a brightness value of each pixel point in a corresponding group of pixel points in the first image under the target exposure parameter, or the terminal device may use an average value of brightness values remaining after outliers of brightness values in the group of pixel points are removed as a brightness value of each pixel point in a corresponding group of pixel points in the first image under the target exposure parameter. This is not specifically limited herein.

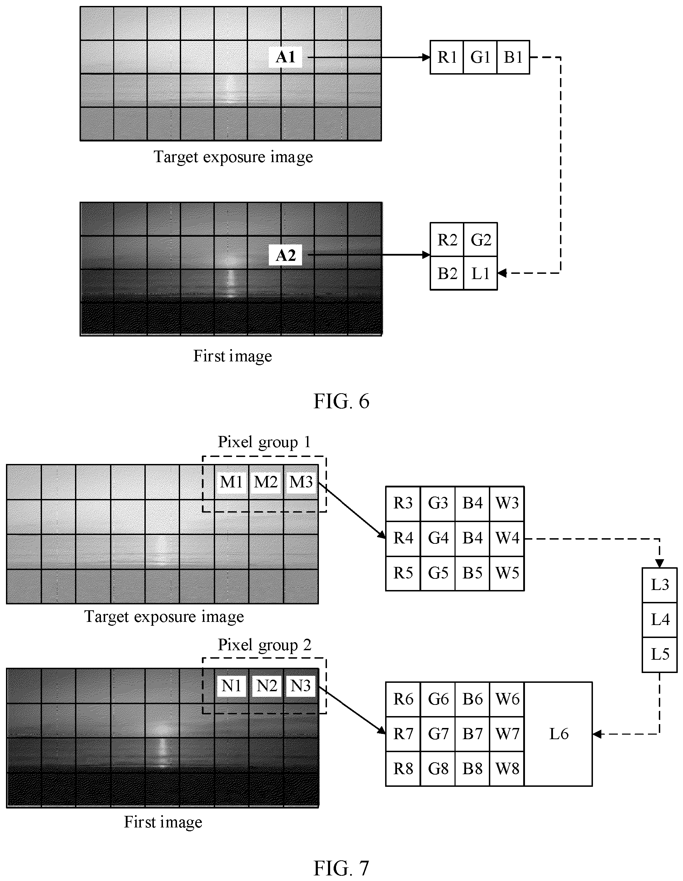

For example, FIG. 6 shows a grouping strategy. In FIG. 6, the terminal device uses one pixel point as a pixel group. A pixel value of a pixel point A1 is R1G1B1, a pixel value of a pixel point A2 is R2G2B2, and the pixel point A1 corresponds to the pixel point A2. A brightness value of the pixel point A2 under the target exposure parameter is a brightness value of the pixel point A1. Therefore, the brightness value L1 of the pixel point A1 may be calculated from pixel values R1, G1, and B1 of the pixel point A1, and used as a brightness value of the pixel point A2 under the target exposure parameter.

The brightness value and the pixel value may satisfy a formula: L=0.299R+0.587G+0.114B, where L is the brightness value. For example, if the pixel values of the pixel point A1 are (R100, G100, B100), it may be determined that the brightness value of the pixel point A1 is 0.299R+0.587G+0.114B=29.9+58.7+11.4=100. Therefore, the brightness value of the pixel point A2 under the target exposure parameter is 100.

For example, FIG. 7 shows another grouping strategy. In FIG. 7, both a first image and a target exposure image include 9×4 pixel points, the terminal device divides the 9×4 pixel points into 12 groups, and each group of pixel points includes 3×1 pixel points. A pixel group 1 includes a pixel point M1, a pixel point M2, and a pixel point M3. A pixel group 2 includes a pixel point N1, a pixel point N2, and a pixel point N3. The pixel point M1 corresponds to the pixel point N1, the pixel point M2 corresponds to the pixel point N2, and the pixel point M3 corresponds to the pixel point N3. Pixel values of the pixel point M1 are R3, G3, B3, and W3, pixel values of the pixel point M2 are R4, G4, B4, and W4, and pixel values of the pixel point M3 are R5, G5, B5, and W5. Pixel values of the pixel point N1 are R6, G6, B6, and W6, pixel values of the pixel point N2 are R7, G7, B7, and W7, and pixel values of the pixel point N3 are R8, G8, B8, and W8. A brightness value of each pixel point (namely, the pixel point N1, the pixel point N2, and the pixel point N3) in the pixel group 2 under the target exposure parameter is a brightness mean value of each pixel point (namely, the pixel point M1, the pixel point M2, and the pixel point M3) in the pixel group 1. The terminal device may calculate a brightness value L3 based on the pixel values (R3, G3, B3, and W3) of the pixel point M1, calculate a brightness value L4 based on the pixel values (R4, G4, B4, and W4) of the pixel point M2, calculate a brightness value L5 based on the pixel values (R5, G5, B5, and W5) of the pixel point M3, and then use the mean value L6 of the brightness value L3, the brightness value L4, and the brightness value L5 as the brightness value of each pixel point (namely, the pixel point N1, the pixel point N2, and the pixel point N3) in the pixel group 2 under the target exposure parameter.

In an optional implementation, the terminal device may further perform an encoding operation on the pixel information of the first image to obtain an image video stream, and perform an encoding operation on the brightness information of the first image to obtain a brightness information video stream.

In this embodiment of this application, the terminal device may encode the pixel information by using a joint photographic experts group (Joint Photographic Experts Group, JEPG) standard, high efficiency video coding (high efficiency video coding, HEVC), portable network graphics (portable network graphics, PNG), run-length encoding (run-length encoding, RLE), or the like, to obtain the image video stream.

The terminal device may perform the encoding operation on the brightness information by using an encoding manner such as linear encoding or non-linear encoding, to obtain second encoded data. Each encoded brightness value may have a bit width of 8 bits, 10 bits, or more bits. The non-linear encoding may include encoding by using a Gamma function, and the like. This is not specifically limited herein. In addition, when the brightness information is encoded, a grouping manner of the pixel group may be encoded into the brightness information video stream together.

By encoding the pixel information and the brightness information of the first image separately, brightness information that can reflect an actual brightness status of the first image can be retained, to facilitate subsequent adjustment of brightness of the first image in a process of displaying the first image.

In an optional implementation, the terminal device may further separately perform a decoding operation on the image video stream and the brightness information video stream, to obtain the pixel information and the brightness information.

For example, that the mobile phone adjusts screen brightness from first screen brightness A to second screen brightness C, a first adjustment coefficient is A/C, and a second adjustment coefficient is 1 is used for describing a specific implementation process of the image preview method provided in this embodiment. The mobile phone may first generate a second image based on the first adjustment coefficient and the second adjustment coefficient. In a process of generating the second image, a pixel value of a pixel point in the first area in the first image is reduced by a factor of A/C, so that a pixel gray scale of the pixel point in the first area is reduced by a factor of A/C; and a pixel value of a pixel point in the second area in the first image remains unchanged. When the mobile phone adjusts the screen brightness from the first screen brightness A to the second screen brightness C, screen brightness of all pixel points in the first image is expanded by a factor of C/A. It can be seen that, observed brightness of the pixel point in the first area is first reduced by the factor of A/C, then expanded by the factor of C/A, and is the same as original observed brightness of the pixel point in the first area; and observed brightness of the pixel point in the second area is expanded by the factor of C/A, and is higher than original observed brightness of the pixel point in the second area. This can increase bright and dark contrast between the first area and the second area in the second image, and expand a dynamic range of the second image.

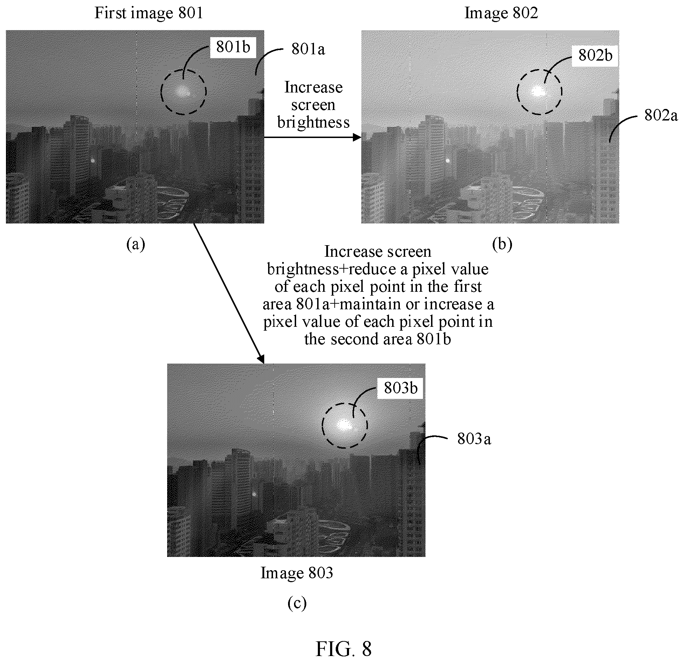

For example, the first image may be as shown in (a) in FIG. 8. A first image 801 includes a first area 801a and a second area 801b. If the mobile phone directly increases the screen brightness and displays the first image, a display effect may be an image 802 as shown in (b) in FIG. 8. In the image 802, both observed brightness of a first area 802a and observed brightness of a second area 802b are increased, but bright and dark contrast of the image 802 remains unchanged, and is the same as that of the first image 801. After obtaining the second image of the first image, the mobile phone increases the screen brightness and displays the second image. A display effect may be an image 803 as shown in (c) in FIG. 8. It can be seen that, observed brightness of a first area 803a in the image 803 approaches observed brightness of the first area 801a in the first image 801, and observed brightness of a second area 803b in the image 803 is significantly higher than observed brightness of the second area 801b in the first image 801. In comparison with the first image 801, the first area 803a and the second area 803b in the image 803 have higher bright and dark contrast, and the image 803 has a higher dynamic range.

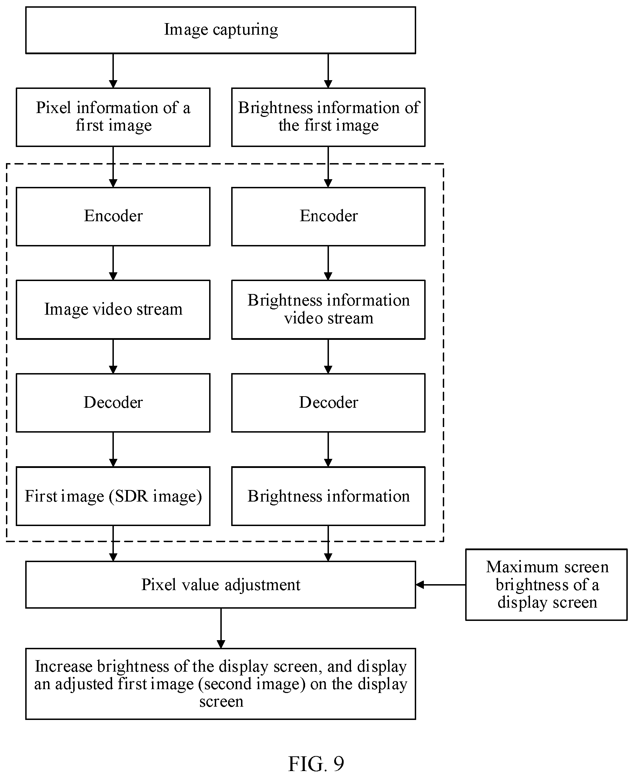

For the image preview method provided in the foregoing embodiment, this embodiment provides a possible specific example. As shown in FIG. 9, the specific example includes the following steps: An electronic device performs image capturing, obtains a plurality of frames of images, and then obtains pixel information and brightness information of a first image obtained by fusing the plurality of frames of images; and then, an encoding operation is performed on the pixel information of the first image to obtain an image video stream, and an encoding operation is performed on the brightness information of the first image to obtain a brightness information video stream. During display, a decoding operation needs to be performed on the image video stream and the brightness information video stream separately first, to obtain the first image (a standard dynamic image) and the brightness information of the first image. Then, a pixel value of the first image is adjusted based on maximum screen brightness (which may also be understood as a brightness capability) of a display screen. Finally, screen brightness of the display screen is increased, and an adjusted first image (that is, a second image) is displayed on the display screen. It should be noted that, in FIG. 9, a process of encoding the pixel information of the first image to obtain the image video stream, encoding the brightness information of the first image to obtain the brightness information video stream, and decoding the image video stream and the brightness information video stream to obtain the first image (the standard dynamic image) and the brightness information of the first image is optional. In another implementation, after obtaining the pixel information and the brightness information of the first image, the electronic device may directly adjust the pixel value of the first image based on the maximum screen brightness of the display screen, increase the screen brightness of the display screen, and display the adjusted first image (that is, the second image) on the display screen.

Based on the above, according to the image preview method provided in this embodiment of this application, in a process of displaying the first image, the screen brightness of the terminal device is increased, to increase the observed brightness of each pixel point. In addition, by reducing the pixel value of the pixel point in the first area, the observed brightness of the pixel point in the first area is reduced, and the pixel value of the pixel point in the second area is increased or maintained, to increase or maintain the observed brightness of the pixel point in the second area, so that the effect of not changing the observed brightness of the pixel point in the second area and increasing the observed brightness of the pixel point in the second area is achieved. In other words, in a process of displaying an SDR image (the first image), a bright area in the SDR image can be brighter, and a dark area can be darker or remain unchanged. This increases bright and dark contrast of the SDR image, and expands a dynamic range of the SDR image.

Some embodiments of this application provide a terminal device. The terminal device may include: a memory, a display screen, and one or more processors. The memory, the display screen, and the processor are coupled. The memory is configured to store computer program code, and the computer program code includes computer instructions. When the processor executes the computer instructions, the terminal device may perform the functions or steps performed by the terminal device in the foregoing method embodiments. For a structure of the terminal device, refer to the structure of the terminal device shown in FIG. 1.

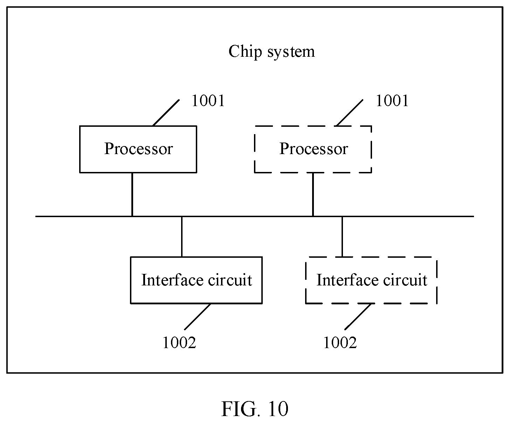

An embodiment of this application further provides a chip system (for example, a system on a chip (system on a chip, SoC)). As shown in FIG. 10, the chip system includes at least one processor 1001 and at least one interface circuit 1002. The processor 1001 and the interface circuit 1002 may be interconnected by lines. For example, the interface circuit 1002 may be configured to receive a signal from another apparatus (for example, a memory of a terminal device). For another example, the interface circuit 1002 may be configured to send a signal to another apparatus (for example, the processor 1001 or a touchscreen of the terminal device). For example, the interface circuit 1002 may read instructions stored in the memory and send the instructions to the processor 1001. When the instructions are executed by the processor 1001, the terminal device is enabled to perform the steps in the foregoing embodiments. It is clear that the chip system may further include another discrete device. This is not specifically limited in this embodiment of this application.

An embodiment of this application further provides a computer-readable storage medium. The computer-readable storage medium includes computer instructions. When the computer instructions are run on the foregoing terminal device, the terminal device is enabled to perform the functions or steps performed by the terminal device in the foregoing method embodiments.

An embodiment of this application further provides a computer program product. When the computer program product runs on a terminal device, the terminal device is enabled to perform the functions or steps performed by the terminal device in the foregoing method embodiments.

Through the descriptions of the foregoing implementations, a person skilled in the art may clearly understand that, for the purpose of convenient and brief description, only division of the foregoing functional modules is used as an example for description. In actual application, the foregoing functions may be allocated to and completed by different functional modules according to requirements. That is, an internal structure of the apparatus is divided into different functional modules to complete all or some of the functions described above.

In the several embodiments provided in this application, it should be understood that the disclosed apparatus and method may be implemented in another manner. For example, the described apparatus embodiments are merely exemplary. For example, the division of the modules or units is merely logical function division, and may be other division during actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate components may or may not be physically separate, and a component displayed as a unit may be one physical unit or a plurality of physical units, that is, may be located in one position, or may be distributed in a plurality of different positions. Some or all of the units may be selected based on actual needs to achieve the objectives of the solutions of embodiments.

In addition, the functional units in embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a readable storage medium. Based on such an understanding, the technical solutions of embodiments of this application essentially, or the part contributing to the conventional technologies, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the methods described in embodiments of this application. The foregoing storage medium includes any medium that can store program code, such as a USB flash drive, a removable hard disk, a read-only memory (read only memory, ROM), a random access memory (random access memory, RAM), a magnetic disk, or an optical disc.

The foregoing content is merely specific implementations of this application, but is not intended to limit the protection scope of this application. Any variation or replacement within the technical scope disclosed in this application shall fall within the protection scope of this application. Therefore, the protection scope of this application shall be subject to the protection scope of the claims.

## Claims

1. An image preview method, applied to a terminal device comprising a display screen, wherein the method comprises:
obtaining a plurality of frames of images in response to an operation of opening a camera application by a user, wherein the plurality of frames of images are in a one-to-one correspondence with a plurality of sets of exposure parameters;
obtaining pixel information and brightness information of a first image obtained by fusing the plurality of frames of images, wherein the pixel information comprises a pixel value of each pixel point in the first image, the brightness information comprises a brightness value of each pixel point in the first image under a target exposure parameter, and the target exposure parameter is any one of the plurality of sets of exposure parameters or a combination of at least two sets of exposure parameters in the plurality of sets of exposure parameters;
adjusting the first image based on the pixel information and the brightness information, to obtain a second image, wherein pixel points in the first image are in a one-to-one correspondence with pixel points in the second image, a pixel value of a pixel point in a first area in the first image is greater than a pixel value of a corresponding pixel point in the second image, a pixel value of a pixel point in a second area in the first image is less than or equal to a pixel value of a corresponding pixel point in the second image, the first area comprises a pixel point that is in the first image and whose brightness value under the target exposure parameter is less than a first threshold, the second area comprises a pixel point that is in the first image and whose brightness value under the target exposure parameter is greater than a second threshold, and the second threshold is greater than or equal to the first threshold; and
increasing screen brightness of the display screen, and displaying the second image on the display screen.

2. The method according to claim 1, wherein the obtaining brightness information of a first image comprises:
obtaining a target exposure image corresponding to the target exposure parameter, wherein the target exposure image is an image captured by the terminal device based on the target exposure parameter; and
grouping pixel points in the target exposure image based on a preset grouping strategy, and using a mean value of brightness values of all pixel points in each group of pixel points as a brightness value of each pixel point in a corresponding group of pixel points in the first image under the target exposure parameter.

3. The method according to claim 2, wherein if the target exposure parameter is a first parameter in the plurality of sets of exposure parameters, the target exposure image is an image frame corresponding to the first parameter; or if the target exposure parameter is a parameter determined based on the at least two sets of exposure parameters in the plurality of sets of exposure parameters, the target exposure image is an image obtained by fusing image frames corresponding to the at least two sets of exposure parameters, wherein the pixel points in the first image are in a one-to-one correspondence with the pixel points in the target exposure image.

4. The method according to any one of claims 1 to 3, wherein the adjusting the first image based on the pixel information and the brightness information, to obtain a second image comprises:
multiplying the pixel value of the pixel point in the first area by a first adjustment coefficient, to obtain the pixel value of the pixel point in the first area in the second image, wherein the first adjustment coefficient is greater than 0 and less than 1; and
multiplying the pixel value of the pixel point in the second area by a second adjustment coefficient, to obtain the pixel value of the pixel point in the second area in the second image, wherein the second adjustment coefficient is greater than or equal to 1.

5. The method according to claim 4, wherein the second area comprises N pixel points, each of the N pixel points corresponds to one second adjustment coefficient, and the multiplying the pixel value of the pixel point in the second area by a second adjustment coefficient, to obtain the pixel value of the pixel point in the second area in the second image comprises:
calculating a second adjustment coefficient of an i^{th} pixel point based on a brightness value of the i^{th} pixel point, wherein the second adjustment coefficient of the i^{th} pixel point is positively correlated with the brightness value of the i^{th} pixel point, the second adjustment coefficient of the i^{th} pixel point is greater than 1, i≤N, and both i and N are positive integers; and
multiplying a pixel value of the i^{th} pixel point by the second adjustment coefficient of the i^{th} pixel point, to obtain a pixel value of an i^{th} pixel point in the second image.

6. The method according to claim 4 or 5, wherein the first adjustment coefficient is a ratio of first screen brightness to second screen brightness, the first screen brightness is screen brightness before the brightness of the display screen is adjusted, the second screen brightness is screen brightness after the brightness of the display screen is adjusted, and the second screen brightness is greater than the first screen brightness and less than or equal to maximum screen brightness of the display screen.

7. The method according to claim 6, wherein the second screen brightness is the maximum screen brightness.

8. The method according to claim 6, wherein the second screen brightness is a smaller value of the maximum screen brightness and a first brightness threshold, the first brightness threshold is a product of the first screen brightness and a preset multiple, and the preset multiple is a natural number greater than 1.

9. The method according to any one of claims 1 to 8, wherein the first threshold and the second threshold are determined based on a first brightness mean value, the first brightness mean value is a mean value of brightness values of all pixel points under the target exposure parameter, and the first threshold and the second threshold are positively correlated with the first brightness mean value.

10. The method according to claim 9, wherein the first threshold is less than the first brightness mean value, and the second threshold is greater than the first brightness mean value.

11. A terminal device, wherein the terminal device comprises a memory, a display screen, and one or more processors, and the memory and the display screen are coupled to the processor, wherein
the memory is configured to store computer program code, the computer program code comprises computer instructions, and when the computer instructions are executed by the processor, the terminal device is enabled to perform the method according to any one of claims 1 to 10.

12. A computer-readable storage medium, comprising computer instructions, wherein
when the computer instructions are run on a terminal device, the terminal device is enabled to perform the method according to any one of claims 1 to 10.
